Europäisches Patentamt

European Patent Office

Office européen des brevets

(11) Publication number: **0 449 785 A1**

# EUROPEAN PATENT APPLICATION

(21) Application number: 91830077.3

(51) Int. Cl.5: **B23C 5/26**, B27B 5/32

(22) Date of filing: 06.03.91

(30) Priority: **12.03.90 IT 933690**

(43) Date of publication of application:
**02.10.91 Bulletin 91/40**

(84) Designated Contracting States:
**AT DE ES FR**

(71) Applicant: **EUROMAC S.P.A.**
**Via Montetrini 2e, Frazione Molino del Piano**
**I-50065 Pontassieve, Firenze(IT)**

(72) Inventor: **Dini, Renzo**
**Via della Torre n.31/c**
**I-50060 Molino del Piano, Pontassieve, F(IT)**

(74) Representative: **Mannucci, Gianfranco,**
**Dott.-Ing. et al**
**Ufficio Tecnico Ing. A. Mannucci Via della**
**Scala 4**
**I-50123 Firenze(IT)**

(54) Device for the quick engagement and disengagement of rotary tools on a spindle.

(57) The device for the quick engagement and disengagement of rotary tools comprises a toolholder unit (13, 15; 113, 115) able to be fitted onto the spindle (3; 103), a locking pin (23; 123) for locking the toolholder unit (13, 15; 113, 115) on the spindle (3; 103), and a tightening means (39; 139) for clamping the locking pin against the toolholder unit (13, 15; 113, 115); the locking pin (23; 123) may take up a position of engagement and a position of disengagement of the toolhoder unit (13, 15; 113, 115) and allows a rapid locking and release of the latter.

FIG.1

The invention relates to a device for the quick engagement and disengagement of rotary tools, such as cutting tools or the like, to and from a spindle of a machine tool. More particularly, the invention refers to a device for the engagement and disengagement of tools of sawing or cutting-off machines for wood, plastic materials, light alloy or similar materials.

To facilitate the replacement of the tools and automate the work processes, systems have been developed for the quick engagement and disengagement of tools on machine tools in the metal working technology and in other technical fields such as in woodworking. In particular, there have been designed snap couplings of pneumatic or hydraulic type, which have, however, the drawback of a limited safety as the retaining action is entrusted to the pressure of the operating fluid. Accordingly, when the pressure of said fluid is missing, because of a failure for example, the retaining action on the tool is no longer exerted, and this is a very dangerous condition. On the other hand, it is not always possible to use the fluid pressure for releasing the tool and commit the locking action to mechanical systems of elastic type or similar. In fact, these solutions require often large overall dimensions allowable only in some machine tools such as milling machines or the like. In this type of machines it is possible to predispose a pack of Belleville springs which is sufficiently large to safely block the tool which is then released by the action of fluid under pressure. In these conditions, it is evident that the tool can never become disengaged for lack of pressure in the fluid. However, in many machine tools such as the wood sawing machines, the overall dimensions to be respected are such as not to allow this type of springs arrangement, so that, in these particular machine tools, the snap couplings have always been of the pneumatic or hydraulic type, wherein the locking of the tool is achieved through the pressure of the fluid, with the above mentioned drawbacks.

It is therefore an object of the invention to provide a device for the quick engagement and disengagement of rotary tools, which makes it possible to obtain a rapid detachment and attachment of the tool, with limited overall dimensions, allowing its use both in machines of larger dimensions and in machines, such as wood sawing machines, wherein the allowable overall dimensions of the toolhoder head are extremely reduced, or wherein, owing to operational or design requirements, it is impossible to apply solutions of the known type utilizing elastic or Similar members for the locking of the tool.

These and other objects that will be apparent to those skilled in the art from a reading of the following description are achieved, in practice, with a device for the quick engagement and disengagement of rotary tools comprising a toolholder unit apt to be fitted on the machine spindle, a locking pin for blocking the toolholder unit on the spindle, and a tightening means for clamping the locking pin against the toolholder unit, said locking pin being able to take up a position for the engagement of the toolholder and a position for the disengagement of same toolholder.

Advantageously, the clamping means may comprise a screw going through the spindle which, in this case, is made hollow, and engaging a threaded hole of the locking pin. The locking screw is accessible from the rear part thereof and allows, once the locking pin is placed with respect to the toolholder unit into an engagement position, the toolholder unit to be clamped on the spindle so as to drive the tool into rotation solid with the spindle itself. A subsequent slight loosening of the locking screw allows the locking pin to be partially released and thus brought into the position for the disengagement of the toolholder unit, the latter being able, at this point, to be withdrawn from the spindle and then replaced with another unit carrying a different tool.

Particularly advantageous embodiments of the device according to the invention are set forth in the appended dependent claims. In particular, the locking pin may be provided with appendixes which, in a position of engagement of the toolholder, cooperate with portions of the toolholder unit by clamping it against the spindle when the locking screw is screwed down, while in the disengagement position said appendixes are brought to coincide with slots of the toolholder unit which allow the withdrawal thereof from the spindle.

The toolholder unit is able to cooperate with the spindle through a frustoconical friction surface and possibly through the addition of one or more pins suitable to cooperate with corresponding shoulders for limiting the relative rotational movement between the tool and the spindle. In particular, the pins may be made solid with the toolholder, while the shoulders may be formed in a collar solid to the said spindle.

When the clamping means are built in the form of a screw going through the hollow spindle, the said screw may be provided with a collar solid thereto, which cooperates with two shoulders made solid with the spindle. During the clamping of the screw, the collar will go into abutment with one of the two shoulders on which the reaction necessary for the clamping of the locking pin of the toolholder unit will be exerted, while, during the loosening of the screw, the collar will cooperate with the other shoulder thereby facilitating the withdrawal of the toolholder unit.

The toolholder unit may be formed in various ways, and also made solid, that is to say in one piece, with the tool itself. However, in a preferred embodiment of the invention, said unit comprises: a tool-supporting member with a through hole having a diameter which approximately corresponds to the diameter of the intermediate portion of the locking pin and which is provided with slots parallel to the hole axis, said slots being provided in such a number and position as to allow the passage of the appendix of the locking pin when said pin is in the tool-disengaging position. Cooperating with said tool-supporting member is a threaded ring nut for the locking of the tool on the supporting member. The toolholder unit may also be provided with a shoulder able to cooperate with a corresponding shoulder of the locking pin for facilitating the removal of the toolholder unit from the spindle.

The invention further relates to a machine tool and, in particular, to a sawing machine for the machining of wood or similar materials, with at least one cutting tool, characterized in that the cutting tool is locked on the respective spindle by means of a device of the type described above. The invention also relates to a sawing machine for the machining of wood or similar materials with at least an engraving tool, characterized in that said engraving tool is blocked on the relevant spindle by means of a device as above described.

The invention will be better understood by the following description and the attached drawing, which shows a practical, not limiting exemplification of the same invention. In the drawing:

Fig. 1 shows a partial longitudinal section of the assembly formed by the spindle for a circular blade of a sawing machine, with the members for blocking the tool on the spindle and the members for driving the same spindle;

Fig. 2 is a view taken from the spindle side of the toolholder unit of Fig. 1;

Fig. 3 shows separately a longitudinal section of the spindle of Fig. 1;

Fig. 4 shows a front view taken on line IV-IV in Fig. 3;

Fig. 5 shows a partial side section view of the locking pin of Fig. 1;

Fig. 6 shows a front view on line VI-VI in Fig. 5; and

Fig. 7 shows the spindle of an engraving tool with a blocking device similar to that shown in Fig. 1 for the cutting tool.

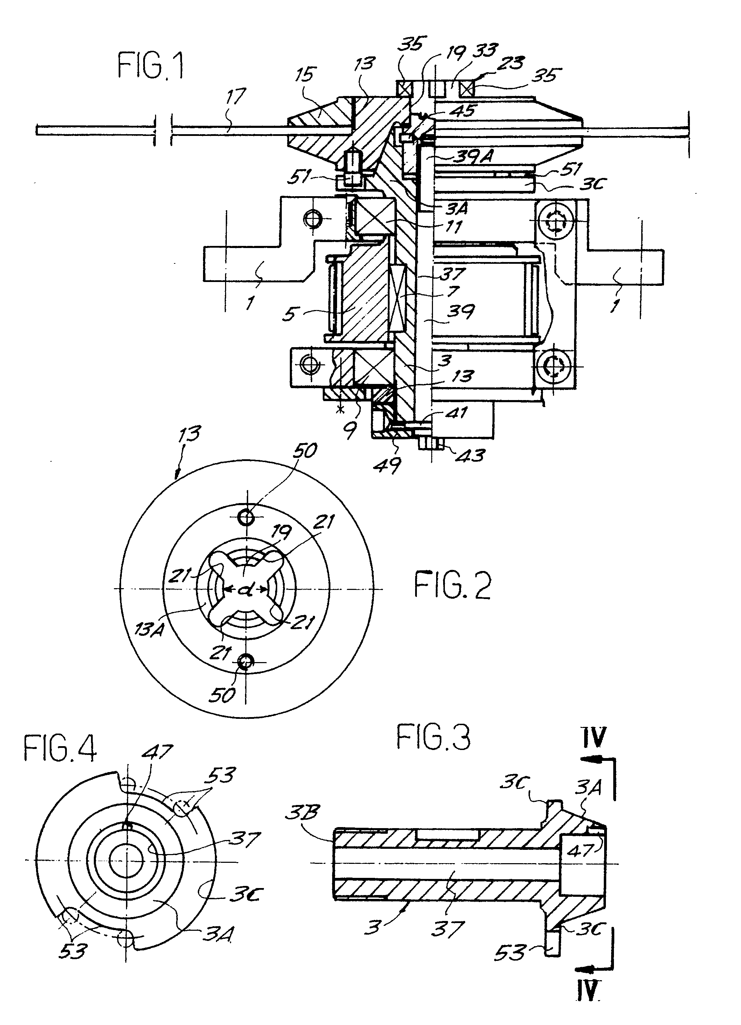

Shown in Fig. 1 is an embodiment according to the invention suitable for the mounting of a cutting tool in the form of a disk blade for cutting wood panels, for example. Numeral 1 indicates the support through which the spindle of the tool is supported on the machine framework. The spindle, indicated by 3, is driven into rotation by a toothed belt extrained on a pulley 5 connected to the spindle 3 through a tongue 7. The spindle 3 is supported by two bearings 9 and 11, the pulley 5 being interposed therebetween, and said bearings are mounted by means of a ring nut 12 screwed on the rear portion (with respect to the tool) of the spindle 3.

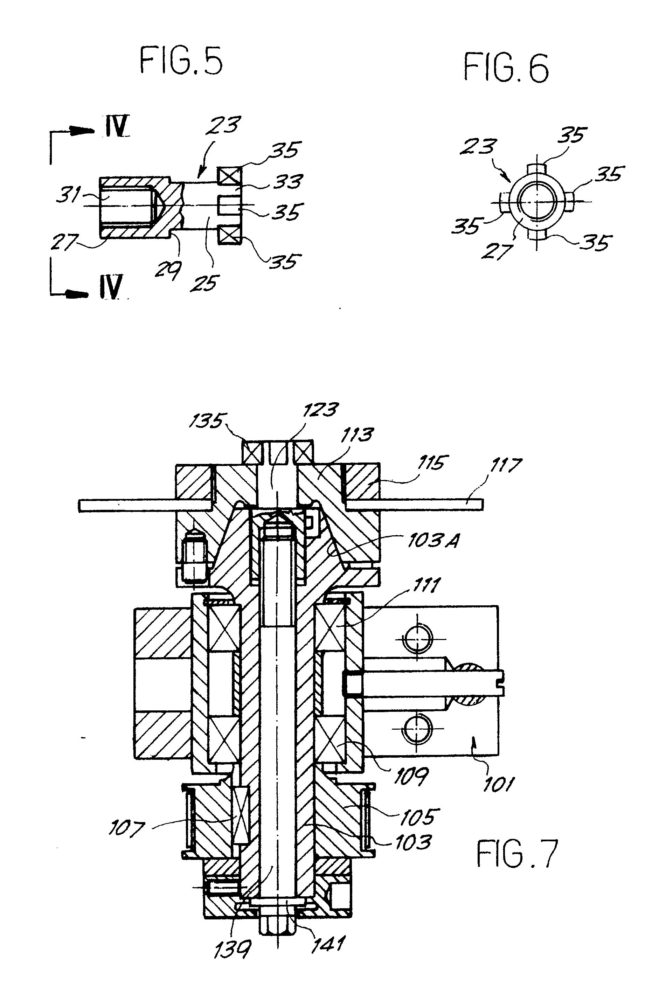

The spindle 3, shown separately in Fig. 3, is provided with a frustoconical front portion 3A, on which a toolholder unit is fitted, the said toolholder unit being made up of a body 13 and a locking ring nut 15, the tool 17 being clamped between said body 13 and said ring nut 15. The body 13 of the toolholder unit is shown in Fig. 2 in a view taken from the side of the spindle. As shown in said Fig. 2, the body 13 is provided with a circular central through hole 19 having an inner diameter indicated by $\underline{d}$ and whose cylindrical surface is broken off by deep grooves 21 (four in the illustrated example) developing along the axis of hole 19 and throughout the axial development of the said hole within the body 13. In the assembled condition, a locking pin 23, separately depicted in Figs. 5 and 6, is housed inside the hole 19. The locking pin 23 has an intermediate portion 25 of cylindrical development and with an outer diameter substantially equal to, or slightly less, than the inner diameter of the through hole 19. The intermediate portion 25 is joined on one side to an end portion 27 which, in the mounting condition, is made to face the spindle side, and whose outer diameter is greater than the intermediate portion 25, thereby forming a shoulder 29. The portion 27 is further provided with a threaded central dead hole 31 for the purposes set forth bereinafter. At the opposite end, the intermediate portion 25 is joined to a portion 33 forming a plurality of appendixes 35 (four in the example of the drawing) symmetrically and correspindingly disposed with respect to the disposition of grooves 21 of the body 13 of the toolholder unit. As clearly shown in Fig. 1, when the toolholder unit 13, 15 is mounted on the spindle 3, it rests with a frustoconical surface 13A (Fig. 2) on the frustoconical surface of the front end portion 3A of the spindle 3. The pin 23 protrudes with its portion 33 and with the relevant appendixes 35 outside the unit 13, 15, and extends inside the spindle within a through hole of the spindle itself. Going through said hole, designated 37, is a screw 39 whose threaded end 39A is engaged within the threaded hole 31 of the portion 27 of pin 23. At the end opposite to the locking pin 33, the screw 39 is provided with a collar 41 solid thereto which cooperates with the shoulder formed on the base surface 3B of spindle 3. The hexagonal head 43 of the screw 39 may thus be tightened inside the threaded hole 31 thereby pulling the locking pin 33 towards the spindle 3 and, if the appendixes are offset with respect to slots 21, this tightening causes in turn a clamping of the toolholder unit 13, 15 against the portion 3A of spindle 3 and, in particular, brings the two frustoconical surfaces into cooperation with each other so as to transmit the motion of the spindle 3 to the tool 17 rigidly carried by the toolholder unit 13, 15. Vice versa, a loosening of screw 39 makes it possible to release the locking pin 33 and then rotate the toolholder unit 13, 15 and said locking pin 33 relatively to each other as far as to bring the appendixes 35 of the locking pin 33 in correspondence of the grooves 21 of the body 13 of the toolholder unit. In this way , the toolholder unit 13, 15 and the relevant tool 17 may be removed from the spindle 3 and replaced by a new toolholder-tool assembly. In practice, since the locking pin 33 is provided with a dowel 45 cooperating with a recess 47 provided for in the portion 3A of spindle 3, the release of the toolholder unit 13, 15 takes place by a rotation of said unit relative to the spindle, while the locking pin 33 does not rotate with respect to the spindle 3 but moves only in the axial direction thereto because of the partial unscrewing of said screw 39 from the threaded hole 31. As shown in Fig. 1, a further ring nut 49 is screwed on the threaded rear portion of spindle 3, said ring nut forming a second shoulder for the collar 41 and facing the shoulder formed by the said spindle 3. The shoulder formed by the ring nut 49 cooperates with the collar 41 of the screw 39 when said screw is screwed off from the hole 31. This causes the screw 39 to remain virtually stopped in the axial direction with respect to the spindle 3, while the unscrewing action of the same screw causes an axial displacement of the locking pin 33 which, through the shoulder 29 (Fig. 5), urges the toolholder unit 13, 15 to leave the locking position on the spindle 3. This arrangement makes it easier to remove the tool when it must be replaced.

Although the clamping carried out by the screw 39 and pin 23 between the toolholder unit 13, 15 and the spindle 3 is sufficient to avoid relative rotations between these two members, provision is also made, as in the illustrated example, for the body 13 of the toolholder unit to be supplied with two threaded holes 50 (Fig. 2) wherein corresponding headless screws 51 are engaged which, in the assembled condition, project rearwardly of the unit 13, 15 within two corresponding slots 53 (Fig. 4) worked out in a collar 3C solid to the spindle 3. This disposition limits the possible relative rotations between the toolholder unit 13, 15 and the spindle 3 to the angular development of the slots 53.

The embodiment illustrated with reference to Figs. 1 to 6 is particularly suitable for the mounting of a cutting blade in a sawing machine. However, the device according to the invention is not limited to this type of application. Fig. 7 shows, for example, a disposition similar to that of Fig. 1, for the attachment of an engraving tool of a sawing machine. In this embodiment, numeral 101 generally indicates the support of a spindle 103 driven into rotation by a toothed belt, not shown, which is entrained on a pulley 105 connected to the spindle 103 through a tongue 107. The spindle 103 is supported by bearings 109, 111 and has a front portion 103A on which a toolholder unit 113, 115, of a type similar to the one indicated by 13, 15 in Fig. 1 and carrying a engraving tool, is mounted. The toolholder unit 113, 115 is provided with a through hole wherein there is housed a locking pin 123 similar to pin 23 of Fig. 1, and provided with appendixes 135 substantially corresponding to the appendix 35 of the pin of Figs. 5 and 6. The clamping is performed through a screw 139 going through the hollow spindle 103 and provided with a collar 141 as described with reference to Fig. 1. The functioning of the device of Fig. 7 corresponds, as far as the locking and unlocking is concerned, to that of the device of Fig. 1. The undisclosed parts relevant to the support system of the spindle on the machine tool are the subject of a copending patent application of the same applicant filed on the same date and are therein described in greater detail.

It is understood that the drawing shows an exemplification given only as a practical demonstration of the invention, as this may vary in the forms and dispositions without nevertheless coming out from the scope of the idea on which the same invention is based. The possible presence of reference numbers in the appended claims has the purpose of facilitating the reading of the claims, reference being made to the description and the drawing, and does not limit the scope of the protection represented by the claims.

## Claims

1. Device for the quick engagement and disengagement of rotary tools, comprising a toolholder unit (13, 15; 113, 115) able to be fitted on the spindle (3; 103) , a locking pin (23; 123) for locking the toolholder unit ( 13, 15; 113, 115) on the spindle (3; 103), and a tightening means (39; 139) for clamping the locking pin against the toolholder unit (13, 15; 113, 115), said locking pin (23; 123) being able to take up a position of engagement and a position of disengament of the toolhoder unit (13, 15; 113, 115).

2. Device according to claim 1, characterized in that the clamping means (39; 139) comprises a screw (39; 139) passing through the hollow spindle (3; 103) and engaging a threaded hole (31) of the locking pin (23; 123).

3. Device according to claim 1 or 2, characterized in that the locking pin (23; 123) is provided with appendixes (35; 135) which, in the position for the engagement of tool (17, 117), cooperate with portions of the toolholder unit (13, 15; 113, 115) and, in the disengagement position, are brought to coincide with grooves (21) of the toolholder unit (13, 15; 113, 115).

4. Device according to one or more of the preceding claims, characterized in that the toolholder unit (13, 15; 113, 115 cooperates with the spindle through a frustoconical friction surface (13A).

5. Device according to one or more of the preceding claims, characterized in that the toolholder unit (13, 15; 113, 115) cooperates with the spindle (3, 103) by means of a pin (51) and a pair of shoulders (53), able to limit the relative rotational movement between the tool and the spindle.

6. Device according to one or more of the preceding claims 2 to 5, characterized in that the screw (39; 139) going through the hollow spindle (3; 103) is provided with a collar (41; 141) which cooperates with two shoulders alternatively for locking and releasing the tool.

7. Device according to one or more of the preceding claims 3 to 6, characterized in that the toolholder unit (13, 15; 113, 115) comprises: a body (13, 113) for the support of the tool (17; 117) with a through hole (19) having a diameter approximately corresponding to the diameter of the threaded portion (25) of the locking pin (23; 123), said hole being provided with grooves (21) which are parallel to the hole axis and in such number and position as to allow the passage of the appendixes (35; 135) of the locking pin (23, 123); and a threaded ring nut (15; 115) for the clamping of the tool over said support body (13; 113).

8. Device according to one or more of the preceding claims, characterized in that the toolholder unit is provided with a shoulder able to cooperate with a shoulder (29) of the locking pin (23; 123) for the removal of said unit from the spindle (3; 103).

9. A sawing machine for working wood or the like, with at least a cutting means, characterized in that said cutting means is locked on the relevant spindle by means of a device according to one or more of claims 1 to 8.

10. A sawing machine for working wood or the like, with at least an engraving tool, characterized in that said engraving tool is locked on the relevant spindle by means of a device according to one or more of claims 1 to 8.

FIG.1

FIG.2

FIG.4

FIG.3

FIG.5

FIG.6

FIG.7

**European Patent Office**

# EUROPEAN SEARCH REPORT

Application Number

**EP 91 83 0077**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 538 171 (SCHLOEMANN AG) <br> * Page 2, column 1, lines 1-37; figures 1-2 * <br> — — — | 1,3,4,5,7, 8,9,10 | B 23 C 5/26 <br> B 27 B 5/32 |
| A | FR-U-2 568 503 (SPINNER) <br> * Page 5, lines 1-16; figures 2-3 * <br> — — — | 1,3,4,7,8, 9,10 | |
| A | EP-A-0 294 536 (GFM-STEYR AT) <br> — — — — — | | |

|  |  |
|---|---|
| | TECHNICAL FIELDS SEARCHED (Int. Cl.5) |
| | B 23 B <br> B 23 C <br> B 24 B <br> B 27 B |

The present search report has been drawn up for all claims

| Place of search | Date of completion of search | Examiner |
|---|---|---|
| The Hague | 14 June 91 | RAMBAUD P.M.J. |